# EUROPEAN PATENT APPLICATION

(11) **EP 3 766 940 A1**
(43) Date of publication of application: **20.01.2021**
(21) Application number: 20178266.1
(22) Date of filing: 04.06.2020
(51) Int. Cl.: C08L 79/08, C08G 73/10

(54) **THERMOPLASTIC COMPOSITION AND METHOD OF PREPARING THE SAME**

(30) Priority: 17.07.2019 TW 108125182
(71) Applicant: Taiwan Textile Research Institute, New Taipei City 236 (TW)
(72) Inventor: CHOU, Shang-Chih, 236 New Taipei City (TW); CHANG, Shao-Yen, 236 New Taipei City (TW); LIN, Chun-Hung, 236 New Taipei City (TW); LIAO, Yuan-Pei, 236 New Taipei City (TW); LAI, Yi-Cang, 236 New Taipei City (TW)
(74) Representative: Becker, Eberhard

(57) **Abstract**

A method of preparing a thermoplastic composition is provided. The method includes the following steps. A polyetherimide or a polyphenylene sulfide is provided. A polyimide is provided, wherein the glass transition temperature of the polyimide is between 128°C and 169°C, the 10% thermogravimetric loss temperature of the polyimide is between 490°C and 534°C, and when the polyimide is dissolved in N-methyl-2-pyrrolidone and the solid content of the polyimide is 30 wt%, the viscosity of the polyimide is between 100 cP and 250 cP. A melt process is performed to mix the polyetherimide and the polyimide or mix the polyphenylene sulfide and the polyimide to form a thermoplastic composition. Further, a thermoplastic composition is also provided.

## Description

### BACKGROUND OF THE INVENTION

### 1. Field of the Invention

The present invention relates to a composition and a method of preparing the same, in particular to a thermoplastic composition and a method of preparing the same.

### 2. Description of Related Art

Many thermoplastic resins called "engineering plastics" have been widely used in various fields due to their excellent heat resistance, chemical resistance, flame retardancy and the like. However, the engineering plastics are still limited in their use. For example, the melt processing temperature of polyetherimide is quite high (between 350°C and 380°C), which is not easy to achieve for a general machine. Furthermore, when poly(vinylidene fluoride) is subjected to high-temperature molding, if the processing temperature is equal to or greater than 320°C, hydrofluoric acid having strong corrosivity is likely to generate. Therefore, how to improve the applicability of engineering plastics is still an important topic for active research.

### SUMMARY OF THE INVENTION

The present invention provides a thermoplastic composition and a method of preparing the same, which have good melt processability and a suitable melt processing temperature.

The method of preparing the thermoplastic composition provided by the present invention includes the following steps. A polyetherimide is provided. A polyimide is provided, where the glass transition temperature of the polyimide is between 128°C and 169°C, the 10% thermogravimetric loss temperature of the polyimide is between 490°C and 534°C, and when the polyimide is dissolved in N-methyl-2-pyrrolidone (NMP) and the solid content of the polyimide is 30 wt%, the viscosity of the polyimide is between 100 cP and 250 cP. A melt process is performed to mix the polyetherimide and the polyimide to form a thermoplastic composition.

The thermoplastic composition provided by the present invention includes a polyetherimide and a polyimide. The glass transition temperature of the polyimide is between 128°C and 169°C, the 10% thermal weight loss temperature of the polyimide is between 490°C and 534°C, and when the polyimide is dissolved in NMP and the solid content of the polyimide is 30 wt%, the viscosity is between 100 cP and 250 cP.

The method of preparing another thermoplastic composition provided by the present invention includes the following steps. A polyphenylene sulfide is provided. A polyimide is provided, where the glass transition temperature of the polyimide is between 128°C and 169°C, the 10% thermogravimetric loss temperature of the polyimide is between 490°C and 534°C, and when the polyimide is dissolved in NMP and the solid content of the polyimide is 30 wt%, the viscosity of the polyimide is between 100 cP and 250 cP. A melt process is performed to mix the polyphenylene sulfide and the polyimide.

Another thermoplastic composition provided by the present invention includes a polyphenylene sulfide and a polyimide. The glass transition temperature of the polyimide is between 128°C and 169°C, the 10% thermogravimetric loss temperature of the polyimide is between 490°C and 534°C, and when the polyimide is dissolved in NMP and the solid content of the polyimide is 30 wt%, the viscosity of the polyimide is between 100 cP and 250 cP.

Based on the above, the method of preparing the thermoplastic composition provided by the present invention includes the following steps of: performing the melt process to mix the polyetherimide and the polyimide of which the glass transition temperature is between 128°C and 169°C, the 10% thermogravimetric loss temperature is between 490°C and 534°C, and when the polyimide is dissolved in NMP and the solid content is 30 wt%, the viscosity is between 100 cP and 250 cP, or performing the melt process to mix the polyphenylene sulfide and the polyimide of which the glass transition temperature is between 128°C and 169°C, the 10% thermogravimetric loss temperature is between 490°C and 534°C, and when the polyimide is dissolved in NMP and the solid content is 30 wt%, the viscosity is between 100 cP and 250 cP, so that the resulting thermoplastic composition has good melt processability and a suitable melt processing temperature.

In order to make the aforementioned features and advantages of the present invention more comprehensible, embodiments are illustrated in detail hereinafter with reference to accompanying drawings.

### BRIEF DESCRIPTION OF THE DRAWINGS

Fig. 1 is a schematic flow chart of a method of preparing a thermoplastic composition according to an embodiment of the present invention.
Fig. 2 is a schematic flow chart of a method of preparing a thermoplastic composition according to another embodiment of the present invention.

### DESCRIPTION OF THE EMBODIMENTS

Herein, a range represented by being from a value to another value is a schematic representative manner of preventing all values within the range from being listed one by one in the specification. Therefore, a record of a particular value range covers any value within the value range and a smaller value range defined by any value within the value range , like a case in which the any value and the smaller value range are explicitly written in the specification.

Herein, the structure of a polymer or a group is sometimes represented by a skeleton formula. Carbon atoms, hydrogen atoms, and carbon-hydrogen bonds can be omitted in this representation. Certainly, if an atom or an atomic group is definitely drawn in a structural formula, the drawn atom or atomic group prevails.

As used herein, "about", "approximately", "essentially" or "substantially" is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ±30%, ±20%, ±10%, ±5% of the stated value. Further, as used herein, "about", "approximately", "essentially" or "substantially" may depend on measurement properties or other properties to select a more acceptable range of deviations or standard deviations without one standard deviation for all properties.

In order to provide a thermoplastic composition having good melt processability and a suitable melt processing temperature, the present invention provides a method of preparing the thermoplastic composition, and the prepared thermoplastic composition can achieve the above advantages. Below, embodiments are listed as examples in which the present invention can be actually implemented accordingly.

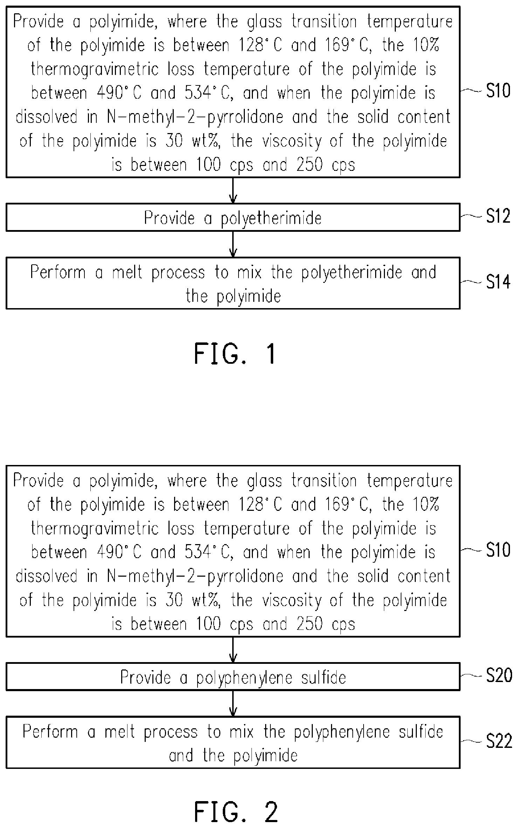

Fig. 1 is a schematic flow chart of a method of preparing a thermoplastic composition according to an embodiment of the present invention. Referring to Fig. 1, firstly, step S10 is performed to provide a polyimide, where the glass transition temperature of the polyimide is between 128°C and 169°C, the 10% thermogravimetric loss temperature of the polyimide is between 490°C and 534°C, and when the polyimide is dissolved in NMP and the solid content of the polyimide is 30 wt%, the viscosity of the polyimide is between 100 cP and 250 cP. If the glass transition temperature, the 10% thermogravimetric loss temperature, and the viscosity of the polyimide do not fall within the above range, the thermoplastic composition prepared in the subsequent step has poor melt processability and thermal stability. In the present embodiment, the polyimide is an ether group-containing polyimide, whereby the high-temperature melt processability of the thermoplastic composition prepared in the subsequent step can be improved.

In the present embodiment, the method of preparing the polyimide may adopt any of the methods of preparing the polyimide known by a person of ordinary skill in the art. In an embodiment, the method of preparing the polyimide may include the following steps. First, a diamine monomer and a tetracarboxylic dianhydride monomer are uniformly mixed in a solvent to obtain a composition used for forming the polyimide. The diamine monomer may be an aromatic group-containing diamine compound. Specifically, the diamine monomer may be 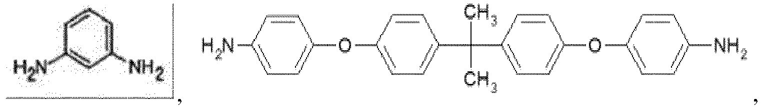 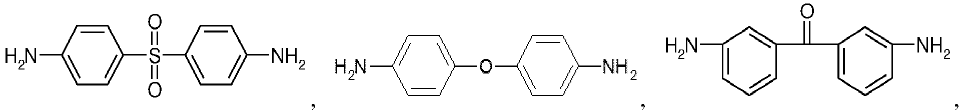 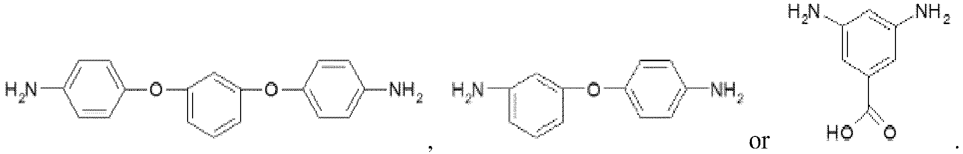 In other words, the diamine monomer may be meta-phenylene diamine (m-PDA), 2,2-bis[4-(4-aminophenoxy)phenyl]propane (BAPP), 4,4'-diaminodiphenyl sulfone, 4,4'-oxydianiline (or 4,4'-diaminodiphenyl ether; ODA), 3,3'-diaminobenzophenone, 1,3-bis(4-aminophenoxy)benzene (TPE-R), 3,4'-oxydianiline (or 3,4'-diaminodiphenyl ether) or 3,5-diaminobenzoic acid (DABA).

The tetracarboxylic dianhydride monomer may be an aromatic group-containing tetracarboxylic dianhydride compound. Specifically, the tetracarboxylic dianhydride monomer may be 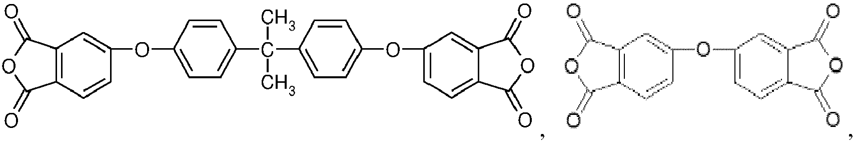 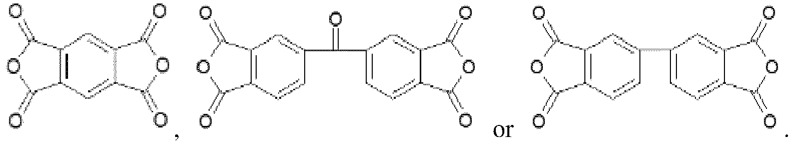 In other words, the tetracarboxylic dianhydride monomer may be 4,4'-(4,4'-isopropylidenediphenoxy)bis(phthalic anhydride (BPADA), oxydiphthalic anhydride (ODPA), pyromellitic dianhydride (PMDA), 3,3',4,4'-benzophenonetetracarboxylic dianhydride (BTDA), or 3,3',4,4'-biphenyltetracarboxylic dianhydride (BPDA).

The solvent is not particularly limited as long as it can dissolve the diamine monomer and the tetracarboxylic dianhydride monomer. Specifically, the solvent includes, for example, but is not limited to, an amide-based solvent (such as N,N-dimethylacetamide (DMAc), N,N-dimethylformamide (DMF), N,N'-diethylacetamide, N-methyl-2-pyrrolidone (NMP), γ-butyrolactone, or hexamethylphosphoramide); a urea-based solvent (such as tetramethylurea or N,N-dimethylethylurea); an sulfoxide or sulfone-based solvent (such as dimethyl sulfoxide (DMSO), diphenyl sulfone or tetramethyl sulfone); a halogenated alkyl-based solvent (such as chloroform or dichloromethane); an aromatic hydrocarbon-based solvent (such as benzene or toluene); a phenol-based solvent (such as phenol or cresol); or an ether-based solvent (such as tetrahydrofuran (THF), 1,3-dioxolane, dimethyl ether, diethyl ether or p-cresol methyl ether). The above solvents may be used alone or in combination. In order to improve the solubility and reactivity of the diamine monomer and the tetracarboxylic dianhydride monomer, the solvent is preferably an amide-based solvent, such as DMAc, DMF and NMP.

In addition, the kind number of the diamine monomer and the kind number of the tetracarboxylic dianhydride monomer included in the composition used for forming the polyimide are not limited as long as the polyimide obtained in the subsequent steps has the glass transition temperature of about 128°C to about 169°C, the 10% thermogravimetric loss temperature of about 490°C to about 534°C, and the viscosity of 100 cP to 250 cP when the polyimide is dissolved in NMP and the solid content is 30 wt%, and has the characteristics of proper melt processability and solvent solubility. For example, the composition used for forming the polyimide may include one kind of diamine monomer and one kind of tetracarboxylic dianhydride monomer. For another example, the composition used for forming the polyimide may include kinds of diamine monomers and one kind of tetracarboxylic dianhydride monomer, one kind of diamine monomer and kinds of tetracarboxylic dianhydride monomers, or kinds of diamine monomers and kinds of tetracarboxylic dianhydride monomers.

Next, after the composition used for forming the polyimide is obtained, the composition used for forming the polyimide is subjected to a polycondensation reaction and a cyclization reaction to obtain the polyimide. In other words, the polyimide is obtained by the polycondensation reaction and the cyclization reaction of the diamine monomer and the tetracarboxylic dianhydride monomer.

The cyclization reaction may be a chemical cyclization method or a thermal cyclization method. In detail, in an embodiment, subjecting the composition used for forming the polyimide to the polycondensation reaction and the cyclization reaction may include the following steps: after subjecting the diamine monomer and the tetracarboxylic dianhydride monomer to the polycondensation reaction to form a poly(amic acid) solution, adding a dehydrating agent and an imidizing agent to the poly(amic acid) solution to undergo an imidization reaction (i.e., a dehydration-cyclization reaction) to form the polyimide, where the dehydrating agent includes, for example, but is not limited to, acetic anhydride, propionic anhydride, n-butyric anhydride, benzoic anhydride or trifluoroacetic anhydride; the imidizing agent includes, for example, but is not limited to, pyridine, picoline, quinoline or isoquinoline. In another embodiment, subjecting the composition used for forming the polyimide to the polycondensation reaction and the cyclization reaction may include the following steps: after subjecting the diamine monomer and the tetracarboxylic dianhydride monomer to the polycondensation reaction to form a poly(amic acid) solution, heating the poly(amic acid) solution to undergo an imidization reaction (i.e., a dehydration-cyclization reaction) to form the polyimide.

Next, step S12 is performed to provide a polyetherimide (PEI). The polyetherimide is a thermoplastic non-crystalline polymer with a solvent-soluble property. In the present embodiment, the polyetherimide may include a repeating unit represented by the following formula I: 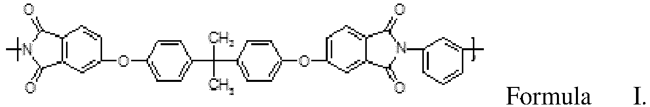 That is, the polyetherimide may be obtained by reacting 4,4'-(4,4'-isopropylidenediphenoxy)bis(phthalic anhydride) (BPADA) with m-phenylenediamine (m-PDA). Further, in the present embodiment, the polyetherimide may be a commercially available product or a recovered powder (i.e., a secondary material), wherein the commercially available product is, for example, spinning-grade ULTEM 9011 PEI and ULTEM 1010 PEI manufactured by Saudi Basic Industries Corporation (Sabic). In the present embodiment, the weight average molecular weight of the polyetherimide may be between about 44,000 g/mol and about 50,000 g/mol.

Next, in step S14, the polyetherimide and the polyimide are subjected to a melt process to mix the polyetherimide and the polyimide. The melt process is a process that melting, mutually bonding and mixing various materials (for example, the polyetherimide and the polyimide) by heating and/or applying pressure. In the present embodiment, the melt process may include, for example, (but is not limited to), a melt compounding process, a thermo-pressing process, a melt blowing process, or melt spinning process. In the present embodiment, the process temperature of the melt process may be between about 300°C and about 350°C.

After performing the above steps S10 to S14, the thermoplastic composition provided in an embodiment of the present invention is prepared. In the present embodiment, in the above thermoplastic composition, the polyimide may be used in an amount of from about 1 part by weight to about 10 parts by weight based on the use amount of 100 parts by weight of the polyetherimide. In detail, if the polyimide is used in an amount of less than 1 part by weight, the melt processability of the polyetherimide cannot be remarkably improved; and if the polyimide is used in an amount of greater than 10 parts by weight, the continuous processability of the obtained thermoplastic composition is poor. In addition, in the present embodiment, the aforementioned thermoplastic composition has a melt index (MI) of from about 7 g/10 min to about 15 g/10 min at about 320°C. Generally, the processing temperature of the polyetherimide is between 350°C and 380°C. In view of this, the thermoplastic composition including the polyetherimide and the polyimide obtained by the above steps S10 to S14 has good melt processability and reduced melt processing temperature.

It should be noted that, in the present embodiment, the method of preparing the thermoplastic composition includes the step of performing the melt process to mix the polyetherimide and the polyimide of which the glass transition temperature is between about 128°C and about 169°C, the 10% thermogravimetric loss temperature is between about 490°C and about 534°C, and when the polyimide is dissolved in NMP and the solid content is 30 wt%, the viscosity is between 100 cP and 250 cP, so that the resulting thermoplastic composition has good melt processability and a suitable melt processing temperature. Further, in the thermoplastic composition, the polyimide is used in an amount of from about 1 part by weight to about 10 parts by weight based on the use amount of 100 parts by weight of the polyetherimide, so the polyimide can be regarded as a plasticizer used for endowing the thermoplastic composition with good melt processability. Moreover, the polyetherimide inherently has good heat resistance, flame retardancy and dyeability, so the thermoplastic composition including the polyetherimide and the polyimide has good heat resistance, flame retardancy and dyeability.

In addition, in the present embodiment, although in the preparation process, the polyimide of which the glass transition temperature is between about 128°C and about 169°C, the 10% thermogravimetric loss temperature is between about 490°C and about 534°C, and when the polyimide is dissolved in NMP and the solid content is 30 wt%, the viscosity is between 100 cP and 250 cP is firstly provided (i.e., step S10), and then the polyetherimide is provided (i.e., step S12), but the present invention is not limited thereto. In other embodiments, in the preparation process, the polyetherimide may be firstly provided, and then the polyimide is provided.

In addition, in the embodiment of Fig. 1, the thermoplastic composition is prepared by performing steps S10 to S14, but the present invention is not limited thereto. Hereinafter, other embodiments will be described with reference to Fig. 2. It is to be noted that the following embodiments have used the same or similar elements, and the same or similar elements are denoted the same or similar numerals, and the description of the same technical content is omitted. For the description of the omitted portions, reference may be made to the foregoing embodiments, and is not repeated in the following embodiments.

Fig. 2 is a schematic flow chart of a method of preparing a thermoplastic composition according to another embodiment of the present invention. Referring to Fig. 2 and Fig. 1, the preparation method shown in Fig. 2 is similar to the preparation method shown in Fig. 1, and therefore the same or similar steps are denoted by the same or similar numerals, and the description of the same technical contents is thus omitted. For the description of the omitted portions, reference may be made to the foregoing embodiments. Hereinafter, the difference between the preparation method shown in Fig. 2 and the preparation method shown in Fig. 1 will be explained.

Referring to Fig. 2, after performing step S10, the preparation method according to the present embodiment includes step S20 to provide a polyphenylene sulfide (PPS). The polyphenylene sulfide is a thermoplastic polymer. In the present embodiment, the polyphenylene sulfide may include a repeating unit represented by the following formula II:

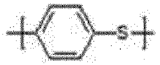

Formula II. In the present embodiment, the polyphenylene sulfide may be a commercially available product, which is, for example, PPS TR03G manufactured by Dainippon Ink & Chemicals, Inc. (DIC).

Next, in step S22, the polyphenylene sulfide and the polyimide are subjected to a melt process to mix the polyphenylene sulfide and the polyimide. The melt process is a process that melting, mutually bonding and mixing various materials (for example, the polyphenylene sulfide and the polyimide) by heating and/or applying pressure. In the present embodiment, the melt process may include, for example, (but is not limited to), a melt compounding process, a thermo-pressing process, a melt blowing process, or melt spinning process. In the present embodiment, the process temperature of the melt thermo process may be between about 300°C and about 350°C.

After performing the above steps S10, S20 to S22, the thermoplastic composition provided in another embodiment of the present invention is prepared. In the present embodiment, in the above thermoplastic composition, the polyimide may be used in an amount of from about 1 part by weight to about 10 parts by weight based on the use amount of 100 parts by weight of the polyphenylene sulfide. In detail, if the polyimide is used in an amount of less than 1 part by weight, the melt processability of the polyphenylene sulfide cannot be remarkably improved; and if the polyimide is used in an amount of greater than 10 parts by weight, the continuous processability of the obtained thermoplastic composition is poor. In addition, in the present embodiment, the aforementioned thermoplastic composition has a melt index (MI) of from about 250 g/10 min to about 700 g/10 min at about 300°C. Generally, the processing temperature of the polyphenylene sulfide is between 290°C and 330°C. In view of this, the thermoplastic composition including the polyphenylene sulfide and the polyimide prepared by the above steps S10, S20 to S22 has good melt processability and reduced melt processing temperature.

It should be noted that, in the present embodiment, the method of preparing the thermoplastic composition includes the step of performing the melt process to mix the polyphenylene sulfide and the polyimide of which the glass transition temperature is between about 128°C and about 169°C, the 10% thermogravimetric loss temperature is between about 490°C and about 534°C, and when the polyimide is dissolved in NMP and the solid content is 30 wt%, the viscosity is between 100 cP and 250 cP, so that the resulting thermoplastic composition has good melt processability and a suitable melt processing temperature. Further, in the thermoplastic composition, the polyimide is used in an amount of from about 1 part by weight to about 10 parts by weight based on the use amount of 100 parts by weight of the polyphenylene sulfide, so the polyimide can be regarded as a plasticizer used for endowing the thermoplastic composition with good melt processability. Moreover, the polyphenylene sulfide inherently has good heat resistance, flame retardancy and dyeability, so the thermoplastic composition including the polyphenylene sulfide and the polyimide has good heat resistance, flame retardancy and dyeability.

In addition, in the present embodiment, although in the preparation process, the polyimide of which the glass transition temperature is between about 128°C and about 169°C, the 10% thermogravimetric loss temperature is between about 490°C and about 534°C, and when the polyimide is dissolved in NMP and the solid content is 30 wt%, the viscosity is between 100 cP and 250 cP is firstly provided (i.e., step S10), and then the polyphenylene sulfide is provided (i.e., step S20), but the present invention is not limited thereto. In other embodiments, in the preparation process, the polyphenylene sulfide may be firstly provided, and then the polyimide is provided.

Features of the present invention will be more specifically described below with reference to Examples 1 to 8 and Comparative Examples 1 to 2. Although the following examples are described, the materials used, the amounts and ratios thereof, the processing details, the processing flow, and the like can be appropriately changed without departing from the scope of the invention. Therefore, the invention should not be construed restrictively by the examples described below.

### Synthesis Examples 1-5

After the polyimides of Synthesis Examples 1 to 5 were formed according to the method of preparing the polyimide disclosed in the foregoing, the glass transition temperatures (Tg), the 10% thermogravimetric loss temperatures (T_{d10%}) and the viscosities of the polyimides of Synthesis Examples 1 to 5 were respectively measured. The description of the aforementioned measurements was as follows, and the measurement results were shown in Table 1.

### <Measurement of glass transition temperature (Tg)>

The glass transition temperatures (°C) of the polyimides of Synthesis Examples 1 to 5 were respectively measured under a nitrogen atmosphere at a heating rate of 10°C/min by using a thermomechanical analyzer (manufactured by Maia Co., Ltd., model: DSC200 F3).

### <Measurement of 10% thermogravimetric loss temperature (T_{d10%})>

The polyimides of Synthesis Examples 1 to 5 were respectively measured under a nitrogen atmosphere at a heating rate of 20°C/min by using a thermogravimetric analyzer (manufactured by TA Instruments, model: Q50), and the change in weight of each polyimide was recorded, where the temperature measured when each polyimide lost 10% by weight was the 10% thermogravimetric loss temperature (°C).

### <Measurement of viscosity>

Firstly, the polyimides of Synthesis Examples 1 to 5 were respectively dissolved in the solvent NMP to form a plurality of sample solutions each having a solid content of 30 wt%. Next, the viscosity (cP) of each sample solution was measured at room temperature by using a rotary viscometer (manufactured by Brookfield Co., Ltd., Model: DV-II + Pro Viscometer).

**Table 1**

| | Tg (°C) | T_{d10%} (°C) | Viscosity (cP) |
|---|---|---|---|
| Synthesis Example 1 | 141 | 509 | 100 |
| Synthesis Example 2 | 161 | 520 | 180 |
| Synthesis Example 3 | 128 | 490 | 173 |
| Synthesis Example 4 | 141 | 502 | 171 |
| Synthesis Example 5 | 169 | 534 | 250 |

### Embodiment 1

The thermoplastic composition of Embodiment 1 was prepared by the following steps. A melt-blending granulation process was performed on 100 parts by weight of polyetherimide (ULTEM 1010 PEI manufactured by Sabic) and 5 parts by weight of polyimide of Synthesis Example 1 placed in a twin screw extruder at 320°C to obtain the thermoplastic composition (i.e., masterbatch) of Embodiment 1.

### Embodiment 2

The thermoplastic composition of Embodiment 2 was prepared by the following steps. A melt-blending granulation process was performed on 100 parts by weight of polyetherimide (ULTEM 1010 PEI manufactured by Sabic) and 7 parts by weight of polyimide of Synthesis Example 1 placed in a twin screw extruder at 320°C to obtain the thermoplastic composition (i.e., masterbatch) of Embodiment 2.

### Embodiment 3

The thermoplastic composition of Embodiment 3 was prepared by the following steps. A melt-blending granulation process was performed on 100 parts by weight of polyetherimide (ULTEM 1010 PEI manufactured by Sabic) and 5 parts by weight of polyimide of Synthesis Example 2 placed in a twin screw extruder at f 320°C to obtain the thermoplastic composition (i.e., masterbatch) of Embodiment 3.

### Embodiment 4

The thermoplastic composition of Embodiment 4 was prepared by the following steps. A melt-blending granulation process was performed on 100 parts by weight of polyetherimide (ULTEM 1010 PEI manufactured by Sabic) and 7 parts by weight of polyimide of Synthesis Example 2 placed in a twin screw extruder at 320°C to obtain the thermoplastic composition (i.e., masterbatch) of Embodiment 4.

### Embodiment 5

The thermoplastic composition of Embodiment 5 was prepared by the following steps. A melt-blending granulation process was performed on 1100 parts by weight of polyetherimide (ULTEM 1010 PEI manufactured by Sabic) and 5 parts by weight of polyimide of Synthesis Example 3 placed in a twin screw extruder at 320°C to obtain the thermoplastic composition (i.e., masterbatch) of Embodiment 5.

### Embodiment 6

The thermoplastic composition of Embodiment 6 was prepared by the following steps. A melt-blending granulation process was performed on 100 parts by weight of polyetherimide (ULTEM 1010 PEI manufactured by Sabic) and 5 parts by weight of polyimide of Synthesis Example 4 placed in a twin screw extruder at 320°C to obtain the thermoplastic composition (i.e., masterbatch) of Embodiment 6.

### Embodiment 7

The thermoplastic composition of Embodiment 7 was prepared by the following steps. A melt-blending granulation process was performed on 100 parts by weight of polyetherimide (ULTEM 1010 PEI manufactured by Sabic) and 5 parts by weight of polyimide of Synthesis Example 5 placed in a twin screw extruder at 320°C to obtain the thermoplastic composition (i.e., masterbatch) of Embodiment 7.

### Embodiment 8

The thermoplastic composition of Embodiment 8 was prepared by the following steps. A melt-blending granulation process was performed on 100 parts by weight of polyphenylene sulfide (PPS TR03G manufactured by DIC) and 1 part by weight of polyimide of Synthesis Example 1 placed in a twin screw extruder at 300°C to obtain the thermoplastic composition (i.e., masterbatch) of Embodiment 8.

### Embodiment 9

The thermoplastic composition of Embodiment 9 was prepared by the following steps. A melt-blending granulation process was performed on 100 parts by weight of polyphenylene sulfide (PPS TR03G manufactured by DIC) and 10 parts by weight of polyimide of Synthesis Example 1 placed in a twin screw extruder at 300°C to obtain the thermoplastic composition (i.e., masterbatch) of Embodiment 9.

### Comparative example 1

Of Comparative Example 1, no other polymers were mixed with the polyetherimide (ULTEM 1010 PEI manufactured by Sabic). That is, the commercially available polyetherimide ULTEM 1010 PEI was directly used of Comparative Example 1.

### Comparative example 2

Of Comparative Example 2, no other polymers were mixed with polyphenylene sulfide (PPS TR03G manufactured by DIC). That is, the commercially available polyphenylene sulfide PPS TR03G was directly used for granulation of Comparative Example 2.

Thereafter, the glass transition temperatures (Tg), the 10% thermogravimetric loss temperatures (T_{d10%}), and the melt index (MI) of the thermoplastic compositions of Embodiments 1 to 9, the ULTEM 1010 PEI of Comparative Example 1, and the PPS TR03G of Comparative Example 2 were respectively measured. The description of the aforementioned measurements was as follows, and the measurement results were shown in Table 2.

### <Measurement of glass transition temperature (Tg)>

The glass transition temperatures (°C) of the thermoplastic compositions of Embodiments 1 to 9, the ULTEM 1010 PEI of Comparative Example 1, and the PPS TR03G of Comparative Example 2 were respectively measured under a nitrogen atmosphere at a heating rate of 10°C/min by using a thermomechanical analyzer (manufactured by Maia Co., Ltd., model: DSC200 F3).

### <Measurement of 10% thermogravimetric loss temperature (T_{d10%})>

The thermoplastic compositions of Embodiments 1 to 9, the ULTEM 1010 PEI of Comparative Example 1, and the PPS TR03G of Comparative Example 2 were respectively measured under a nitrogen atmosphere at a heating rate of 20°C/min by using a thermogravimetric analyzer (manufactured by TA Instruments, model: Q50), and the changes in weights of each thermoplastic composition, the ULTEM 1010 PEI, and the PPS TR03G were respectively recorded, where the temperature measured when each of the thermoplastic compositions, the ULTEM 1010 PEI and the PPS TR03G lost 10% by weight was the 10% thermogravimetric loss temperature (°C).

### <Measurement of Melt Index (MI)>

The melt index (g/10 min) of the thermoplastic compositions of Embodiments 1 to 9, the ULTEM 1010 PEI of Comparative Example 1, and the PPS TR03G of Comparative Example 2 were respectively measured according to the specifications of ASTM D-1238, where the loaded weight used in the measurements of the thermoplastic compositions of Embodiments 1 to 7, and the ULTEM 1010 PEI of Comparative Example 1 was 5 kg, the loaded weight used in the measurements of the thermoplastic compositions of Embodiments 8 to 9, and the PPS TR03G of Comparative Example 2 was 2.16 kg, and the test temperature varies depending on the test samples used. Referring to Table 2 for the detailed test temperature. In general, the higher the melt index is, the better the melt processability is and the better the hot fluidity is.

**Table 2**

| | Tg (°C) | T_{d10%} (°C) | MI(g/10 min)/Test Temperature (°C)/Test Force (kg) |
|---|---|---|---|
| Embodiment 1 | 202 | 513 | 10/320/5 |
| Embodiment 2 | 208 | 543 | 12/320/5 |
| Embodiment 3 | 205 | 523 | 10/320/5 |
| Embodiment 4 | 208 | 538 | 12.7/320/5 |
| Embodiment 5 | 210 | 521 | 13/320/5 |
| Embodiment 6 | 214 | 524 | 10.8/320/5 |
| Embodiment 7 | 211 | 531 | 14.4/320/5 |
| Embodiment 8 | 80 | 468 | 265/300/2.16 |
| Embodiment 9 | 80 | 455 | 612/300/2.16 |
| Comparative Example 1 | 214 | 550 | 13/337/5 |
| Comparative Example 2 | 80 | 470 | 188/300/2.16 |

As can be seen from the above Table 1, the thermoplastic compositions of Embodiments 1 to 7 and the ULTEM 1010 PEI of Comparative Example 1 had similar glass transition temperatures and similar thermogravimetric loss temperatures. The results show that the thermoplastic composition of the present invention obtained by mixing the polyetherimide and the polyimide of which the glass transition temperature, the 10% thermogravimetric loss temperature, and the viscosity when the polyimide is dissolved in NMP and the solid content is 30 wt% are in a specific range through the melt process has similar thermal properties to the polyetherimide itself.

Similarly, as can be seen from the above Table 1, the thermoplastic compositions of Embodiments 8 to 9 and the PPS TR03G of Comparative Example 2 had similar glass transition temperatures and similar thermogravimetric loss temperatures. The results show that the thermoplastic composition obtained by mixing the polyphenylene sulfide and the polyimide of which the glass transition temperature, the 10% thermogravimetric loss temperature, and the viscosity when the polyimide is dissolved in NMP and the solid content is 30 wt% are in a specific range through the melt process has similar thermal properties to the polyphenylene sulfide itself.

As can be seen from the above Table 1, the thermoplastic compositions of Embodiments 1 to 7 had similar fluidity at lower melt processing temperatures in comparison with the melt index and melt processing temperature of the ULTEM 1010 PEI of Comparative Example 1. The results show that the thermoplastic composition obtained by mixing the polyetherimide and the polyimide of which the glass transition temperature, the 10% thermogravimetric loss temperature, and the viscosity when the polyimide is dissolved in NMP and the solid content is 30 wt% are in a specific range through the melt process has good melt processability, good hot fluidity, and reduced melt processing temperature.

Further, as can be seen from the above Table 1, the thermoplastic compositions of Embodiments 8 to 9 had more excellent fluidity at the same melt processing temperature in comparison with the melt index and the melt processing temperature of the PPS TR03G of Comparative Example 2. The results show that the thermoplastic composition obtained by mixing the polyphenylene sulfide and the polyimide of which the glass transition temperature, the 10% thermogravimetric loss temperature, and the viscosity when the polyimide is dissolved in NMP and the solid content is 30 wt% are in a specific range through the melt process has good melt processability, good hot fluidity and good melt processing temperature.

## Claims

1. A method of preparing a thermoplastic composition, comprising:
providing a polyetherimide;
providing a polyimide, wherein a glass transition temperature of the polyimide is between 128°C and 169°C, a 10% thermogravimetric loss temperature of the polyimide is between 490°C and 534°C, and when the polyimide is dissolved in N-methyl-2-pyrrolidone (NMP) and a solid content of the polyimide is 30 wt%, a viscosity of the polyimide is between 100 cP and 250 cP; and
performing a melt process to mix the polyetherimide and the polyimide to form the thermoplastic composition.

2. The method of preparing the thermoplastic composition according to claim 1, wherein the polyimide is used in an amount of from 1 part by weight to 10 parts by weight based on a use amount of 100 parts by weight of the polyetherimide.

3. The method of preparing the thermoplastic composition according to claim 1, wherein a process temperature of the melt process is between 300°C and 350°C.

4. The method of preparing the thermoplastic composition according to claim 1, wherein a melt index (MI) of the thermoplastic composition is from 7 g/10 min to 15 g/10 min at 320°C.

5. A thermoplastic composition, comprising:
a polyetherimide; and
a polyimide, wherein a glass transition temperature of the polyimide is between 128°C and 169°C, a 10% thermogravimetric loss temperature of the polyimide is between 490°C and 534°C, and when the polyimide is dissolved in N-methyl-2-pyrrolidone and a solid content of the polyimide is 30 wt%, a viscosity of the polyimide is between 100 cP and 250 cP.

6. The thermoplastic composition according to claim 5, wherein a content of the polyimide is from 1 part by weight to 10 parts by weight based on a content of 100 parts by weight of the polyetherimide.

7. The thermoplastic composition according to claim 5, wherein a melt index (MI) of the thermoplastic composition is from 7 g/10 min to 15 g/10 min at 320°C.

8. A method of preparing a thermoplastic composition, comprising:
providing a polyphenylene sulfide;
providing a polyimide, wherein a glass transition temperature of the polyimide is between 128°C and 169°C, a 10% thermogravimetric loss temperature of the polyimide is between 490°C and 534°C, and when the polyimide is dissolved in N-methyl-2-pyrrolidone and a solid content of the polyimide is 30 wt%, a viscosity of the polyimide is between 100 cP and 250 cP; and
performing a melt process to mix the polyphenylene sulfide and the polyimide to form the thermoplastic composition.

9. The method of preparing the thermoplastic composition according to claim 8, wherein the polyimide is used in an amount of from 1 part by weight to 10 parts by weight based on a use amount of 100 parts by weight of the polyphenylene sulfide.

10. The method of preparing the thermoplastic composition according to claim 8, wherein a process temperature of the melt process is between 300°C and 350°C.

11. The method of preparing the thermoplastic composition according to claim 8, wherein a melt index (MI) of the thermoplastic composition is from 250 g/10 min to 700 g/10 min at 300°C.

12. A thermoplastic composition, comprising:
a polyphenylene sulfide; and
a polyimide, wherein a glass transition temperature of the polyimide is between 128°C and 169°C, a 10% thermogravimetric loss temperature of the polyimide is between 490°C and 534°C, and when the polyimide is dissolved in N-methyl-2-pyrrolidone and a solid content of the polyimide is 30 wt%, a viscosity of the polyimide is between 100 cP and 250 cP.

13. The thermoplastic composition according to claim 12, wherein a content of the polyimide is from 1 part by weight to 10 parts by weight based on a content of 100 parts by weight of the polyphenylene sulfide.

14. The thermoplastic composition according to claim 12, wherein a melt index (MI) of the thermoplastic composition is from 250 g/10 min to 700 g/10 min at 300°C.
